Europäisches Patentamt

European Patent Office

Office européen des brevets

(19)

(11) Numéro de publication: **0 151 252**
.A1.

(12) **DEMANDE DE BREVET EUROPEEN**

(21) Numéro de dépôt: **84114637.6**

(22) Date de dépôt: **01.12.84**

(51) Int. Cl.⁴: **A 47 J 31/40**

(30) Priorité: **26.01.84 CH 363/84**

(43) Date de publication de la demande:
**14.08.85 Bulletin 85/33**

(84) Etats contractants désignés:
**AT BE CH DE FR GB IT LI LU NL SE**

(71) Demandeur: **SOCIETE DES PRODUITS NESTLE S.A.**
**Case postale 353**
**CH-1800 Vevey(CH)**

(72) Inventeur: **Masek, Petr**
**Rue d'Entremonts 24**
**CH-1400 Yverdon(CH)**

**Lesautres inventeurs ont renonce a leur designation**

(54) **Machine à café.**

㊗ Machine à café utilisant des cartouches de café enfermées dans un réceptable en deux parties, l'une solidaire d'un corps fixe et l'autre d'un couvercle mobile, comportant un dispositif d'éjection actionné par l'ouverture du réceptacle de la cartouche.

_Fig 1_

Croydon Printing Company Ltd.

## Machine à café

La présente invention concerne une machine à café, plus particulièrement destinée à utiliser des cartouches de café telles que décrites dans le brevet suisse No. 605 293 (première demande déposée le 17 décembre 1976).

Cette machine à café est caractérisée par le fait qu'elle comporte un dispositif d'éjection actionné par l'ouverture du réceptacle de la cartouche.

Le dessin annexé représente, à titre d'exemple, une forme d'exécution de l'invention.

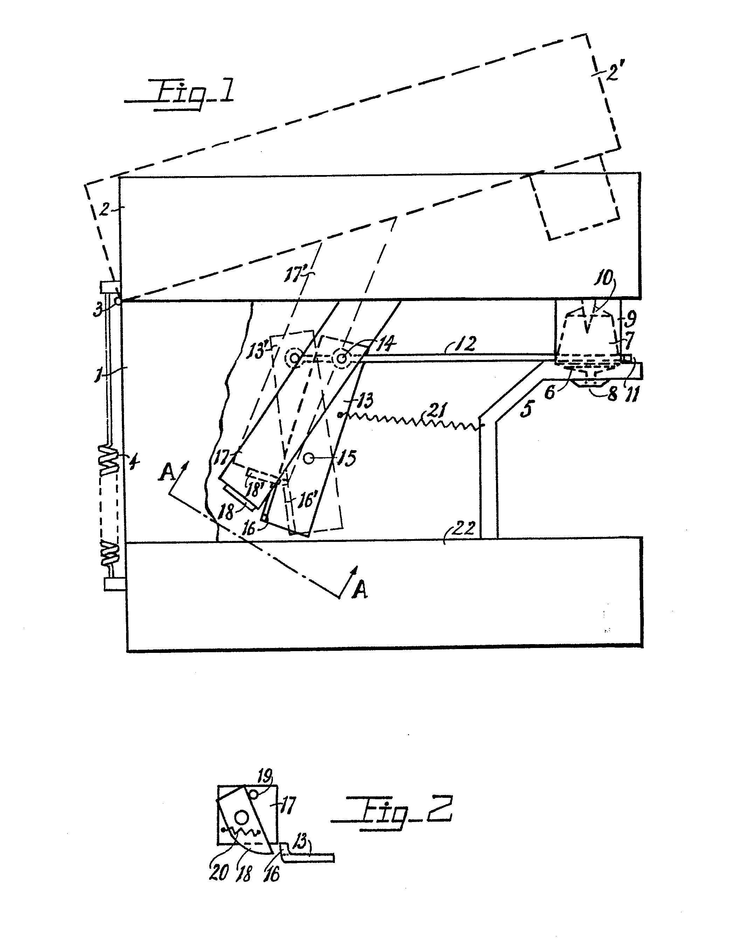

La Figure 1 est une élévation en coupe partielle d'une machine à café selon l'invention.

La Figure 2 est une vue de détail selon A-A de la Figure 1.

Au dessin, la machine comporte un corps fixe 1 et un couvercle 2 mobile autour d'une charnière 3. Un ressort de compensation 4 facilite la levée de ce couvercle.

La machine comporte une pompe à eau et un dispositif de chauffage de l'eau qui, dans une forme préférentielle de l'invention, sont solidaires du couvercle et non du corps de la machine.

Un support 5 solidaire du corps 1 comporte un logement 6 destiné à recevoir et à centrer une cartouche de café 7. Un orifice 8 permet l'écoulement du café sortant de la cartouche. En position de fonctionnement représentée en traits pleins, la cartouche 7 est enfermée de manière étanche dans une chambre 9 solidaire du couvercle mobile 2, et par un verrouillage conventionnel, non représenté.

Cette chambre comporte un poinçon 10 de perforation et d'injection d'eau dans la cartouche.

Le socle de la machine comporte un tiroir 22.

Le dispositif d'éjection actionné par l'ouverture du réceptacle de la cartouche est le suivant:

Un crochet 11 entourant partiellement la base de la cartouche 7 peut coulisser horizontalement sur le support 5. Il est prolongé par une tige 12 qui relie le crochet 11 à un levier 13 au moyen d'un pivot 14. Le levier 13 lui-même pivote autour d'un axe 15 solidaire du corps 1. Du côté opposé au pivot 14, le levier 13 se termine par une languette 16. Il est rappelé par un ressort 21.

D'autre part, un bras 17 solidaire du couvercle 2 porte à son extrémité opposée au couvercle un cliquet 18 ramené contre une butée 19 par un ressort de rappel 20 (Figure 2).

Le fonctionnement est le suivant:

Partant de la position ouverte, c'est-à-dire le couvercle 2 étant dans la position représentée en pointillé et désignée par 2', le crochet 11 dans la position représentée en traits pleins, on place une cartouche de café 7 dans le logement 6. Le couvercle est alors rabattu dans la position en traits pleins et verrouillé, ce qui ferme de manière étanche le réceptacle de la cartouche constitué par le logement 6 et la chambre 9. Du même coup, le poinçon 10 perfore le sommet de la cartouche, puis l'on actionne la pompe et le chauffage de l'eau, qui est injectée dans la cartouche par le poinçon 10, ainsi que cela est déjà expliqué dans le brevet suisse No. 605 293. L'extrait liquide de café sort par l'orifice 8 et s'écoule dans une tasse préalablement placée au dessous.

Pour remplacer la cartouche épuisée, on lève le couvercle 2, ce qui ouvre le réceptacle de la cartouche. En même temps, le cliquet 18 accroche la languette 16 du levier 13 et fait tourner ce dernier dans le sens contraire des aiguilles d'une montre. Ce mouvement, qui tend le ressort 21, tire la tige 12 et par conséquent le crochet 11, ce qui fait basculer la cartouche 7 vers la gauche. La cartouche 7, épuisée, tombe dans le tiroir 22.

Au moment où le levier 13, la languette 16, le bras 17 et le cliquet 18 sont dans la position représentée en pointillé et désignée respectivement par 13', 16', 17' et 18', le cliquet arrive à l'extrémité de la languette et ne la retient plus. Sous l'action du ressort de rappel 21, le levier 13 tourne dans le sens des aiguilles d'une montre et ramène la tige 12, donc le crochet 11 à la position initiale. Le logement 6 est ainsi dégagé et prêt à recevoir une nouvelle cartouche.

Lorsque l'on referme le couvercle 2, le cliquet 18 pivote et passe par dessus la languette 16, puis est rappelé par le ressort 20 contre la butée 19 dans sa position initiale.

En variante, la chambre 9 et le poinçon 10 sont solidaire du corps fixe et le logement 6 du couvercle mobile, la tige 12 actionnant un extracteur de la cartouche. Dans une telle variante, la pompe et le chauffage de l'eau sont avantageusement solidaires du corps fixe.

Revendications

1. Machine à café utilisant des cartouches de café enfermées dans un réceptacle en deux parties, l'une solidaire d'un corps fixe et l'autre d'un couvercle mobile, caractérisée par le fait qu'elle comporte un dispositif d'éjection actionné par l'ouverture du réceptacle de la cartouche.

2. Machine selon la revendication 1, caractérisée par le fait que le corps porte un logement destiné à recevoir et centrer une cartouche et le couvercle une chambre pourvue d'un poinçon de perforation et d'injection d'eau.

3. Machine selon la revendication 2, caractérisée par le fait qu'un crochet coulissant entourant partiellement la base de la cartouche est relié par un pivot à une extrémité d'un levier pivoté sur le corps, l'autre extrémité dudit levier comportant une languette, un bras solidaire du couvercle portant un cliquet apte à coopérer avec ladite languette.

4. Machine selon la revendication 2, caractérisée par le fait qu'une pompe d'alimentation et un chauffage de l'eau sont solidaires du couvercle.

0151252

*Fig_1*

*Fig_2*

Office européen
des brevets

**RAPPORT DE RECHERCHE EUROPEENNE**

**0151252**

Numéro de la demande

EP 84 11 4637

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | CH-A- 406 561 (STASSE) <br> * En entier * | 1,2 | A 47 J 31/40 |
| A | FR-A-1 410 288 (DUCOMET) <br> * En entier * | 1,2 | |
| A | EP-A-0 041 931 (UNOPER S.r.l.) <br> * Page 12, lignes 5-14; figure 3 * | 1 | |
| A | US-A-3 295 998 (GOROS) <br> * Figures 15,16 * | 1 | |
| A | FR-A-2 424 726 (ILLYCAFFE S.P.A.) <br> * Page 3, lignes 4-10; figure * | 4 | DOMAINES TECHNIQUES RECHERCHES (Int. Cl.4) |
| A | US-A-4 029 003 (MANARESI) | | A 47 J |
| A | FR-A-2 140 619 (JACOBS & CO.) | | |

Le présent rapport de recherche a été établi pour toutes les revendications

| Lieu de la recherche <br> LA HAYE | Date d'achèvement de la recherche <br> 24-04-1985 | Examinateur <br> SCHARTZ J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1803 03 82